# EUROPÄISCHE PATENTSCHRIFT

(11) **EP 1 401 072 B1**
(45) Veröffentlichungstag und Bekanntmachung des Hinweises auf die Patenterteilung: **28.11.2007**
(21) Anmeldenummer: 03018969.0
(22) Anmeldetag: 21.08.2003
(51) Int. Cl.: H02G 3/04

(54) **Leitungsführungskanal**
Cable guiding channel
Canalisation de conduite de cables

(30) Priorität: 19.09.2002 DE 20214499 U
(43) Veröffentlichungstag der Anmeldung: 24.03.2004
(73) Patentinhaber: Tehalit GmbH, 67716 Heltersberg (DE)
(72) Erfinder: Schnurr, Richard, 66957 Vinningen (DE); Bundschuh, Jean Hubert, 67110 Reichshoffen (FR)
(74) Vertreter: Patentanwälte Möll und Bitterich

(56) Entgegenhaltungen:
- DE-U- 8 328 391

## Beschreibung

Die Erfindung betrifft Leitungsführungskanäle gemäß dem Oberbegriff des Anspruchs 1.

Leitungsführungskanäle der hier relevanten Art sind seit vielen Jahrzehnten weltweit in großen Stückzahlen im Einsatz. Sie bestehen im wesentlichen aus einem Kanalunterteil, meist mit U- bzw. C-förmigem Querschnitt und wenigstens einem Kanaloberteil, welches lösbar auf das Kanalunterteil aufrastbar ist. Um zu verhindern, dass bei abgenommenem Kanaloberteil die bereits im Leitungsführungskanal verlegten elektrischen Leitungen herausfallen, wird die offene Seite der Kanalunterteile mit Hilfe von Klammern überbrückt. Diese Klammern sollen eine Vielzahl von Bedingungen erfüllen. Sie sollen an beliebigen Stellen des Kanalunterteils anbringbar sein, um auf die Besonderheiten des jeweiligen Anwendungsfalls flexibel reagieren zu können. Die Verbindung zwischen Klammer und Kanal soll fest sein, um das Herausfallen von Leitungen zu verhindern, und zwar unabhängig davon, ob der Kanal waagerecht, senkrecht oder über Kopf montiert ist. Die Verbindung soll leicht lösbar sein, um jederzeit Leitungen herausnehmen oder nachlegen zu können. Schließlich sollen die Klammern das Aufschnappen und Lösen des Kanaloberteils nicht behindern.

Beim Schließen eines Leitungsführungskanals müssen die derzeit handelsüblichen Klammern zunächst vollständig montiert, d. h. beidseitig auf dem Kanalunterteil fest montiert sein, bevor das Kanaloberteil auf das Kanalunterteil aufgerastet werden kann. Da sich unter einem Kanaloberteil üblicherweise mehrere Klammern befinden, erfordert die Summe der Vorgänge eine nicht zu vernachlässigende Zeitspanne.

In der Druckschrift DE 83 28 391 U wird ein Leitungsführungskanal mit einer Überbrückungsklammer beschrieben, welcher an mindestens einem Ende ein Eingriffsprofil zum lösbaren Eingriff in ein Randprofil der angrenzenden Kanalseitenwand aufweist, wobei die Überbrückungsklammer in Längsrichtung des Randprofils bzw. der Randprofile stufenlos verstellt werden kann. Die Kanalseitenwände sind durch die Überbrückungsklammer, wenn diese mit ihren beiden Enden in Eingriff mit den jeweiligen Randprofilen ist, gegen elastischen Widerstand aneinander angenähert und geben erst nach dem Lösen der Überbrückungsklammer wieder nach.

Die vorliegende Erfindung unterscheidet sich von diesem Stand der Technik dadurch, dass die Steifigkeit der erfindungsgemäßen Klammer kleiner ist als die Steifigkeit des Kanaloberteils und dass das aufgesetzte Kanaloberteil die Klammer berührt.

Der vorliegenden Erfindung liegt die Aufgabe zugrunde, einen Leitungsführungskanal anzugeben, bei dem die Klammern in einem Arbeitsgang mit dem Aufrasten des Deckels verrastet werden können.

Diese Aufgabe wird gelöst durch einen Leitungsführungskanal mit den Merkmalen des Anspruchs 1.

Wie beim Stand der Technik werden auch die erfindungsgemäßen Klammern zunächst nur einseitig auf das Kanalunterteil aufgesteckt. Das andere Klammerende bleibt frei, so dass Leitungen bequem nachgelegt oder herausgenommen werden können, ohne dass die sich bereits im Kanalunterteil befindenden Leitungen herausfallen können. Dank der erfindungsgemäßen Ausgestaltung von Kanalunterteil, Klammer und Kanaloberteil verrasten die Klammern ohne weiteres mit dem Kanalunterteil, sobald das Kanaloberteil auf das Kanalunterteil aufgerastet wird.

Besitzt das Kanaloberteil gemäß einer Ausgestaltung der Erfindung Rastfüße, so ist die Klammer vorteilhafterweise kürzer als der lichte Abstand der Rastfüße. Dadurch wird verhindert, dass beim Abnehmen des Kanaloberteils auch die Klammern versehentlich gelöst werden.

Gemäß einer Weiterbildung der Erfindung besitzen die Schulterleisten ebenfalls eine Gleitschräge, die mit dem Kanaloberteil, insbesondere dessen Rastfüßen, kooperiert.

Anhand der Zeichnung soll die Erfindung in Form eines Ausführungsbeispiels näher erläutert werden. Es zeigen
- Fig. 1: im Querschnitt einen Leitungsführungskanal mit einseitig für das Nachlegen von Leitungen geöffneter Klammer als Sprengbild,
- Fig. 2: den Leitungsführungskanal der Fig. 1 nach Beendigung der Verlegungsarbeiten,
- Fig. 3: den Ausschnitt III aus Fig. 2 in vergrößertem Maßstab und
- Fig. 4: als Schrägansicht den Leitungsführungskanal der Fig. 1 bis 3 mit aufgesetztem Kanaloberteil.

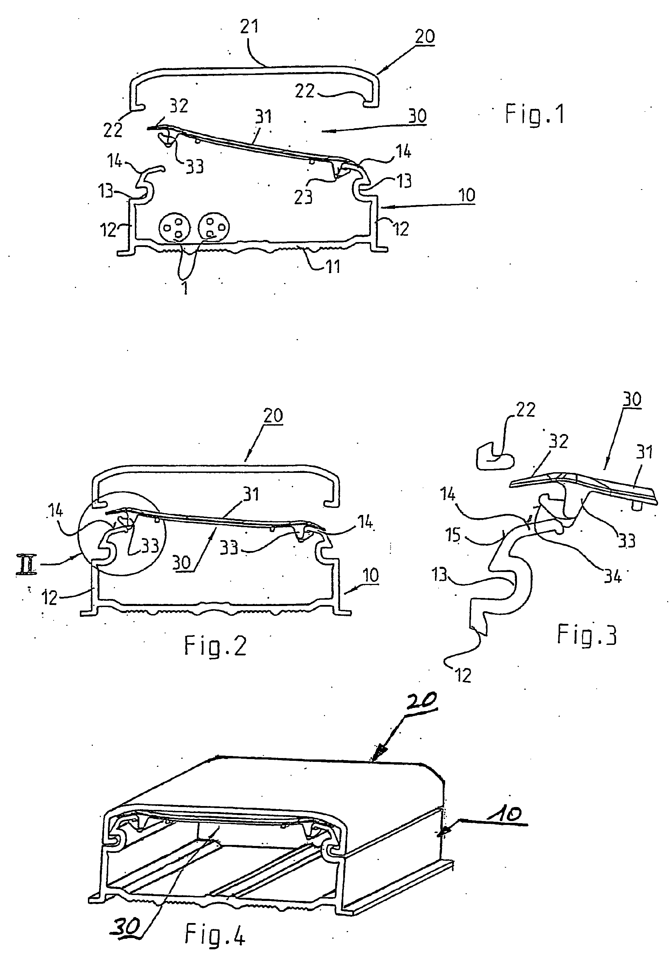

Fig. 1 zeigt einen Leitungsführungskanal, bestehend aus einem Kanalunterteil 10 mit etwa C-förmigem Querschnitt, gebildet durch einen Boden 11, zwei Seitenwände 12 mit Deckelhalteprofilen 13 und zum Zentrum hin gerichteten Schulterleisten 14. Einseitig auf die eine Schulterleiste 14 aufgesteckt erkennt man eine Klammer 30, bestehend aus einem Leistenkörper 31 mit Enden 32, die sich über die Schulterleisten 14 legen, und hakenförmigen Rastprofilen 33 an der Unterseite. Die Klammer 30 ist linksseitig geöffnet und ermöglicht so das bequeme Nachlegen bzw. Herausnehmen von elektrischen Leitungen 1. Schließlich erkennt man noch ein Kanaloberteil 20 mit einer Deckelfläche 21 und Rastfüßen 22, die mit den Deckelhalteprofilen 13 am Kanalunterteil 10 kooperieren.

Fig. 2 zeigt den Zustand nach Beendigung der Leitungsverlegungsarbeiten. Das linke Rastprofil 33 der Klammer 30 liegt aufgrund der federnden Eigenschaften der Klammer 30 an der linken Schulterleiste 14 auf.

In Fig. 3 ist die Situation in vergrößertem Maßstab dargestellt. Man erkennt am Rastprofil 33 eine Gleitschräge 34, die mit dem freien Ende der Schulterleiste 14 derart kooperiert, dass beim Herunterdrücken der Klammer 30 die Schulterleiste 14 ausweicht, so dass das Rastprofil 33 mit der Schulterleiste 14 verrasten kann.

Des weiteren zeigt die Fig. 3, dass das Ende 32 des Leistenkörpers 31 der Klammer 30 kürzer ist als die lichte Weite der Rastfüße 22 des Kanaloberteils 20. Die Klammer 30 kollidiert somit weder beim Aufsetzen noch beim Lösen des Kanaloberteils 20 mit den Rastfüßen 22.

Wird nun das Kanaloberteil 20 auf das Kanalunterteil 10 aufgerastet, so legt sich das Kanaloberteil 20 zunächst an die Klammer 30 an und drückt deren freies Ende nach unten. Dabei weicht unter der Wirkung der Gleitschräge 34 die Schulterleiste 14 zunächst nach außen aus, um dann mit dem Rastprofil 33 zu verrasten. Anschließend gleitet der Rastfuß 22 des Kanaloberteils 20 auf der Gleitschräge 15 der Schulterleiste 14 entlang nach unten. Dadurch werden Seitenwand 12, Deckelhalteprofil 13 und Schulterleiste 14 einwärts gepresst, wobei aufgrund der gewählten Steifigkeiten die Klammer 30 elastisch nachgibt. Sobald der Rastfuß 22 in das Deckelhalteprofil 13 eingerastet ist, federn die Seitenwand 12 und die Klammer 30 wieder elastisch zurück. Der Leitungsführungskanal ist ordnungsgemäß verschlossen, ohne dass die Klammern 30 zuvor einzeln verrastet werden mussten.

## Patentansprüche

1. Leitungsführungskanal, im wesentlichen umfassend
- ein Kanalunterteil (10) mit
- Boden (11),
- Seitenwänden (12),
- Deckelhalteprofilen (13) an den Seitenwänden (12)
- und zum Zentrum hin orientierten Schulterleisten (14),
- ein Kanaloberteil (20)
- und wenigstens eine Klammer (30) mit
- einem Leistenkörper (31)
- und Rastprofilen (33), die lösbar mit den Schulterleisten (14) verrastbar sind,
- die Rastprofile (33) besitzen eine Gleitschräge (34), die mit der Schulterleiste (14) kooperiert,
- die Steifigkeit des Kanalunterteils (10) ist kleiner als die Steifigkeit der Klammer (30),
**gekennzeichnet durch** die Merkmale:
- die Steifigkeit der Klammer (30) ist kleiner als die Steifigkeit des Kanaloberteils (20),
- das aufgesetzte Kanaloberteil (20) berührt die Klammer (30),
- nach einseitigem Aufstecken der Klammer (30) auf das Kanalunterteil (10) legt sich das auf das Kanalunterteil (10) aufgesetzte Kanaloberteil (20) an die Klammer (30) an, deren freies Ende beim Aufrasten des Kanaloberteils (20) aüf das Kanalunterteil (10) nach unten gedrückt wird und mit dem Kanalunterteil (10) verrastet.

2. Leitungsführungskanal nach Anspruch 1, **gekennzeichnet durch** die Merkmale:
- das Kanaloberteil (20) besitzt Rastfüße (22),
- die Klammer (30) ist kürzer als der lichte Abstand der Rastfüße (22).

3. Leitungsführungskanal nach Anspruch 1 oder 2, **gekennzeichnet durch** das Merkmal:
- die Schulterleiste (14) besitzt eine Gleitschräge (15), die mit den Enden des Kanaloberteils (20), insbesondere mit dessen Rastfüßen (22), kooperiert.

## Claims

1. Wiring trunking, essentially comprising
- a trunking lower part (10) with
- a bottom (11)
- side walls (12),
- cover retaining profiles (13) at the side walls (12)
- and shoulder strips (14) oriented towards the centre,
- a trunking upper part (20)
- and at least one clamp (30) with
- a strip body (31)
- and locking profiles (33) which can be releasably interlocked with the shoulder strips (14),
- the locking profiles (33) have a slide slope (34) which co-operates with the shoulder strip (14),
- the stiffness of the trunking lower part (10) is lower than the stiffness of the clamp (30),
**characterised by** the features:
- the stiffness of the clamp (30) is lower than the stiffness of the trunking upper part (20),
- the positioned trunking upper part (20) contacts the clamp (30),
- after fitting the clamp (30) onto the trunking lower part (10) on one side, the trunking upper part (20) positioned on the trunking lower part (10) is applied to the clamp (30), the free end of which is pushed downwards and interlocks with the trunking lower part (10) when the trunking upper part (20) is locked onto the trunking lower part (10).

2. Wiring trunking according to Claim 1, **characterised by** the features:
- the trunking upper part (20) has locking feet (22),
- the clamp (30) is shorter than the clear distance between the locking feet (22).

3. Wiring trunking according to Claim 1 or 2, **characterised by** the feature:
- the shoulder strip (14) has a slide slope (15) which co-operates with the ends of the trunking upper part (20), in particular with the locking feet (22) thereof.

## Revendications

1. Canalisation de conduite de câbles, comprenant essentiellement
- une partie inférieure de canalisation (10) présentant
- un fond (11),
- des parois latérales (12),
- des profilés de retenue du couvercle (13) sur les parois latérales (12)
- et des rebords d'épaulement (14) orientés vers le centre,
- une partie supérieure de canalisation (20)
- et au moins une bride (30) présentant
- un corps de rebord (31)
- des profilés d'arrêt (33) qui peuvent être encliquetés de manière détachable avec les rebords d'épaulement (14),
- les profilés d'arrêt (33) possèdent une inclinaison de glissement (34) qui coopère avec le rebord d'épaulement (14),
- la rigidité de la partie inférieure de canalisation (10) est inférieure à la rigidité de la bride (30),
**caractérisée par** les caractéristiques suivantes:
- la rigidité de la bride (30) est inférieure à la rigidité de la partie supérieure de canalisation (20),
- la partie supérieure de canalisation installée (20) touche la bride (30).
- après l'insertion unilatérale de la bride (30) sur la partie inférieure de canalisation (10), la partie supérieure de canalisation (20) installée sur la partie inférieure de canalisation (10) prend appui sur la bride (30), dont l'extrémité libre est pressée vers le bas lors de l'encliquetage de la partie supérieure de canalisation (20) sur la partie inférieure de canalisation (10) et s'encliquète avec la partie inférieure de canalisation (10).

2. Canalisation de conduite de câbles selon la revendication 1, **caractérisée par** les caractéristiques suivantes :
- la partie supérieure de canalisation (20) possède des pieds d'encliquetage (22),
- la bride (30) est plus courte que l'écartement entre les pieds d'encliquetage (22).

3. Canalisation de conduite de câbles selon la revendication 1 ou 2, **caractérisée par** la caractéristique suivante :
- le rebord d'épaulement (14) comporte une inclinaison de glissement (15) qui coopère avec les extrémités de la partie supérieure de canalisation (20), notamment avec ses pieds d'encliquetage (22).
